# EUROPEAN PATENT APPLICATION

(11) **EP 4 811 028 A1**
(43) Date of publication of application: **23.09.2026**
(21) Application number: 24891462.4
(22) Date of filing: 14.11.2024
(51) Int. Cl.: G02F 1/161, C09K 3/10

(54) **SEALING AGENT FOR DIMMING ELEMENT**

(30) Priority: 16.11.2023 JP 2023195319
(71) Applicant: Sekisui Chemical Co., Ltd., Osaka-shi, Osaka 530-8565 (JP)
(72) Inventor: TAKADA, Hayato, Mishima-gun, Osaka 618-0021 (JP)
(74) Representative: Cabinet Beau de Loménie
(86) International application number: PCT/JP2024/040451
(87) International publication number: WO 2025/105426

(57) **Abstract**

The present invention aims to provide a sealant for a light-control device, the sealant having excellent adhesiveness and excellent low-contamination properties. Provided is a sealant for a light-control device, the sealant containing: a curable resin; a photoradical polymerization initiator; and an amine thermal curing agent, the curable resin containing a (meth)acrylic compound having no epoxy group, the (meth)acrylic compound containing a compound having two or more (meth)acryloyl groups in one molecule, the curable resin containing no epoxy compound or containing 5 parts by mass or less of an epoxy compound in 100 parts by mass of the curable resin.

## Description

### TECHNICAL FIELD

The present invention relates to sealants for light-control devices.

### BACKGROUND ART

Light-control devices change their light transmittance in response to applied voltage. Liquid crystal light-control devices including liquid crystal materials and electrochromic devices including electrochromic compounds are widely used.

Liquid crystal light-control devices change the alignment of liquid crystal molecules with a change in the electric potential difference between the transparent electrode layers, thereby regulating the amount of light transmitted. Liquid crystal light-control devices have excellent responsiveness. Electrochromic devices show reversible color changes through electrochemical redox reactions of electrochromic compounds. Electrochromic devices can maintain a colored state until a bleaching drive is performed, and thus can operate with low power consumption.

Such light-control devices include sealants for sealing the liquid crystal, the electrochromic compound solution, or the like therein. For example, Patent Literature 1 discloses a sealant containing an epoxy compound as a sealant for surrounding a liquid crystal layer of a light-control unit. Patent Literature 2 discloses a sealing material containing a (meth)acrylic compound or epoxy compound as a sealing material for electrochromic devices.

### CITATION LIST

### - Patent Literature

Patent Literature 1: JP 2021-117456 A
Patent Literature 2: JP 7327621 B

### SUMMARY OF INVENTION

### - Technical Problem

Sealants containing epoxy compounds have excellent adhesiveness but tend to contaminate liquid crystal, electrochromic compound solutions, or the like. In contrast, sealants containing (meth)acrylic compounds have low contamination risk (excellent low-contamination properties) but may have insufficient adhesiveness.

The present invention aims to provide a sealant for a light-control device, the sealant having excellent adhesiveness and excellent low-contamination properties.

### - Solution to Problem

The disclosure 1 relates to a sealant for a light-control device, the sealant containing: a curable resin; a photoradical polymerization initiator; and an amine thermal curing agent, the curable resin containing a (meth)acrylic compound having no epoxy group, the (meth)acrylic compound containing a compound having two or more (meth)acryloyl groups in one molecule, the curable resin containing no epoxy compound or containing 5 parts by mass or less of an epoxy compound in 100 parts by mass of the curable resin.

The disclosure 2 relates to the sealant for a light-control device according to the disclosure 1, wherein the curable resin contains no epoxy compound.

The disclosure 3 relates to the sealant for a light-control device according to the disclosure 1 or 2, wherein the amine thermal curing agent is contained in an amount of 0.5 parts by mass or more and 3.0 parts by mass or less relative to 100 parts by mass of the curable resin.

The disclosure 4 relates to the sealant for a light-control device according to the disclosure 1, 2, or 3, wherein the amine thermal curing agent is contained in an amount of 0.5 parts by mass or more and 3.0 parts by mass or less relative to 100 parts by mass of the compound having two or more (meth)acryloyl groups in one molecule.

The disclosure 5 relates to the sealant for a light-control device according to the disclosure 1, 2, 3, or 4, wherein the amine thermal curing agent contains a hydrazide compound.

The disclosure 6 relates to the sealant for a light-control device according to the disclosure 1, 2, 3, 4, or 5, which is used for sealing an electrochromic device.

The present invention is described in detail below.

The present inventor focused on a sealant for a light-control device containing a (meth)acrylic compound and a photoradical polymerization initiator, the (meth)acrylic compound including a compound having two or more (meth)acryloyl groups in one molecule. The inventor considered adding an amine thermal curing agent to the sealant to improve the adhesiveness of the sealant through the Michael addition reaction of the amine thermal curing agent and the (meth)acrylic compound. As a result, the inventor found out that a sealant for a light-control device with excellent adhesiveness can be obtained. The inventor also found out that the sealant can also have excellent low-contamination properties when the sealant contains no or a small amount of epoxy compound. The present invention is thus completed.

The sealant for a light-control device of the present invention contains a curable resin.

The curable resin contains a (meth)acrylic compound having no epoxy group. When the curable resin contains the (meth)acrylic compound, the sealant for a light-control device of the present invention can have excellent low-contamination properties.

The "(meth)acrylic" herein refers to acrylic or methacrylic. The "(meth)acrylic compound" refers to a compound having a (meth)acryloyl group. The "(meth)acryloyl" refers to acryloyl or methacryloyl.

The (meth)acrylic compound contains a compound having two or more (meth)acryloyl groups in one molecule (hereinafter also referred to as a "bi- or higher functional (meth)acrylic compound"). The sealant for a light-control device of the present invention contains the bi- or higher functional (meth)acrylic compound as the (meth)acrylic compound in combination with the photoradical polymerization initiator (described later) and the amine thermal curing agent (described later), thereby having excellent curability and excellent adhesiveness.

Among the bi- or higher functional (meth)acrylic compounds, examples of bifunctional (meth)acrylic compounds, which have two (meth)acryloyl groups in one molecule, include bifunctional epoxy (meth)acrylates, bifunctional (meth)acrylate compounds, and bifunctional urethane (meth)acrylates. Preferred among these are bifunctional epoxy (meth)acrylates.

The "epoxy (meth)acrylate" herein refers to a compound obtained by reacting all the epoxy groups in an epoxy compound with (meth)acrylic acid.

Examples of the bifunctional epoxy (meth)acrylates include those obtained by reacting a bifunctional epoxy compound, which has two epoxy groups in one molecule, with (meth)acrylic acid using a conventional method in the presence of a basic catalyst.

Examples of the bifunctional epoxy compound as a raw material of the bifunctional epoxy (meth)acrylates include bisphenol A epoxy compounds, bisphenol F epoxy compounds, bisphenol S epoxy compounds, 2,2'-diallyl bisphenol A epoxy compounds, hydrogenated bisphenol epoxy compounds, propylene oxide-added bisphenol A epoxy compounds, resorcinol epoxy compounds, biphenyl epoxy compounds, sulfide epoxy compounds, diphenyl ether epoxy compounds, dicyclopentadiene epoxy compounds, naphthalene epoxy compounds, glycidylamine epoxy compounds, alkyl polyol epoxy compounds, rubber-modified epoxy compounds, and glycidyl ester compounds. In particular, resorcinol epoxy compounds are preferred from the standpoint of improving the reliability. In other words, the bi- or higher functional (meth)acrylic compound preferably includes a resorcinol epoxy (meth)acrylate.

In the case that the bi- or higher functional (meth)acrylic compound includes the resorcinol epoxy (meth)acrylate, the lower limit of the amount of the resorcinol epoxy (meth)acrylate in 100 parts by mass of the curable resin is preferably 10 parts by mass, and the upper limit thereof is preferably 90 parts by mass. When the amount of the resorcinol epoxy (meth)acrylate is within the range, the resulting sealant for a light-control device can have higher reliability. The lower limit of the amount of the resorcinol epoxy (meth)acrylate is more preferably 30 parts by mass, and the upper limit thereof is more preferably 80 parts by mass.

Examples of the bifunctional (meth)acrylate compounds include 1,3-butanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, ethylene glycol di(meth)acrylate, diethylene glycol di(meth)acrylate, tetraethylene glycol di(meth)acrylate, polyethylene glycol di(meth)acrylate, 2-n-butyl-2-ethyl-1,3-propanediol di(meth)acrylate, dipropylene glycol di(meth)acrylate, tripropylene glycol di(meth)acrylate, polypropylene glycol di(meth)acrylate, neopentyl glycol di(meth)acrylate, ethylene oxide-added bisphenol A di(meth)acrylate, propylene oxide-added bisphenol A di(meth)acrylate, ethylene oxide-added bisphenol F di(meth)acrylate, dimethylol dicyclopentadienyl di(meth)acrylate, ethylene oxide-modified isocyanuric acid di(meth)acrylate, 2-hydroxy-3-(meth)acryloyloxy propyl (meth)acrylate, carbonate diol di(meth)acrylate, polyether diol di(meth)acrylate, polyester diol di(meth)acrylate, polycaprolactone diol di(meth)acrylate, and polybutadiene diol di(meth)acrylate.

The bifunctional urethane(meth)acrylates can be obtained by, for example, reacting a bifunctional isocyanate compound with a hydroxy group-containing (meth)acrylic acid derivative in the presence of a tin compound in a catalytic amount.

Examples of the bifunctional isocyanate compound include isophorone diisocyanate, 2,4-tolylene diisocyanate, 2,6-tolylene diisocyanate, hexamethylene diisocyanate, trimethylhexamethylene diisocyanate, diphenylmethane-4,4'-diisocyanate (MDI), hydrogenated MDI, polymeric MDI, 1,5-naphthalene diisocyanate, norbornane diisocyanate, tolidine diisocyanate, xylylene diisocyanate (XDI), hydrogenated XDI, lysine diisocyanate, and tetramethylxylylene diisocyanate.

The bifunctional isocyanate compound may be a chain-extended bifunctional isocyanate compound obtained by reacting a polyol with an excessive amount of a bifunctional isocyanate compound.

Examples of the polyol include ethylene glycol, propylene glycol, glycerol, sorbitol, trimethylolpropane, carbonate diol, polyether diol, polyester diol, and polycaprolactone diol.

Examples of the hydroxy group-containing (meth)acrylic acid derivative include hydroxyalkyl mono(meth)acrylates, mono(meth)acrylates of dihydric alcohols, and mono(meth)acrylates of trihydric alcohols.

Examples of the hydroxyalkyl mono(meth)acrylates include 2-hydroxyethyl (meth)acrylate, 2-hydroxypropyl (meth)acrylate, 2-hydroxybutyl (meth)acrylate, and 4-hydroxybutyl (meth)acrylate.

Examples of the dihydric alcohols include ethylene glycol, propylene glycol, 1,3-propanediol, 1,3-butanediol, 1,4-butanediol, and polyethylene glycol.

Examples of the trihydric alcohols include trimethylolethane, trimethylolpropane, and glycerol.

Among the bi- or higher functional (meth)acrylic compounds, examples of tri- or higher functional (meth)acrylic compounds, which have three or more (meth)acryloyl groups in one molecule, include ethylene oxide-added isocyanuric acid tri(meth)acrylate, trimethylolpropane tri(meth)acrylate, ethylene oxide-added trimethylolpropane tri(meth)acrylate, propylene oxide-added trimethylolpropane tri(meth)acrylate, caprolactone-modified trimethylolpropane tri(meth)acrylate, glycerol tri(meth)acrylate, propylene oxide-added glycerol tri(meth)acrylate, pentaerythritol tri(meth)acrylate, tris(meth)acryloyloxyethyl phosphate, ditrimethylolpropane tetra(meth)acrylate, pentaerythritol tetra(meth)acrylate, dipentaerythritol penta(meth)acrylate, and dipentaerythritol hexa(meth)acrylate.

The lower limit of the amount of the bi- or higher functional (meth)acrylic compound in 100 parts by mass of the curable resin is preferably 90 parts by mass. When the amount of the bi- or higher functional (meth)acrylic compound is 90 parts by mass or more, the resulting sealant for a light-control device can have better low-contamination properties. The lower limit of the amount of the bi- or higher functional (meth)acrylic compound is more preferably 95 parts by mass, still more preferably 97 parts by mass. The amount of the bi- or higher functional (meth)acrylic compound is particularly preferably 100 parts by mass. In other words, the curable resin particularly preferably consists only of the bi- or higher functional (meth)acrylic compound.

The (meth)acrylic compound may include a monofunctional (meth)acrylic compound, which has one (meth)acryloyl group in one molecule.

The curable resin contains no epoxy compound or contains 5 parts by mass or less of an epoxy compound in 100 parts by mass of the curable resin. When the curable resin contains no epoxy compound, or when the amount of an epoxy compound, if contained, is 5 parts by mass or less, the sealant for a light-control device of the present invention can have excellent low-contamination properties.

The "epoxy compound" herein refers to a compound having an epoxy group.

Examples of the epoxy compound include bisphenol A epoxy compounds, bisphenol F epoxy compounds, bisphenol S epoxy compounds, 2,2'-diallyl bisphenol A epoxy compounds, hydrogenated bisphenol epoxy compounds, propylene oxide-added bisphenol A epoxy compounds, resorcinol epoxy compounds, biphenyl epoxy compounds, sulfide epoxy compounds, diphenyl ether epoxy compounds, dicyclopentadiene epoxy compounds, naphthalene epoxy compounds, phenol novolac epoxy compounds, ortho-cresol novolac epoxy compounds, dicyclopentadiene novolac epoxy compounds, biphenyl novolac epoxy compounds, naphthalene phenol novolac epoxy compounds, glycidyl amine epoxy compounds, alkyl polyol epoxy compounds, rubber-modified epoxy compounds, and glycidyl ester compounds.

Examples of the epoxy compound also include partially (meth)acrylic-modified epoxy compounds.

The partially (meth)acrylic-modified epoxy compound herein refers to a compound having one or more epoxy groups and one or more (meth)acryloyl groups in one molecule, obtained by reacting (meth)acrylic acid with some of the epoxy groups of an epoxy compound having two or more epoxy groups. Although having a (meth)acryloyl group, the partially (meth)acrylic-modified epoxy compound is regarded as the epoxy compound, not the (meth)acrylic compound.

The curable resin preferably contains no epoxy compound.

In the case that the curable resin contains the epoxy compound, the upper limit of the amount of the epoxy compound in 100 parts by mass of the curable resin is 5 parts by mass. When the amount of the epoxy compound is 5 parts by mass or less, the resulting sealant for a light-control device can have excellent low-contamination properties. The upper limit of the amount of the epoxy compound is preferably 3 parts by mass, more preferably 1 part by mass.

The lower limit of the amount of the entire curable resin in 100 parts by mass of the sealant for a light-control device of the present invention is preferably 65 parts by mass, and the upper limit thereof is preferably 96 parts by mass. When the amount of the entire curable resin is in the range, the resulting sealant for a light-control device can have better curability and better adhesiveness. The lower limit of the amount of the entire curable resin is more preferably 70 parts by mass, and the upper limit thereof is more preferably 88 parts by mass.

The sealant for a light-control device of the present invention contains a photoradical polymerization initiator.

Examples of the photoradical polymerization initiator include benzophenone compounds, acetophenone compounds, acylphosphine oxide compounds, titanocene compounds, oxime ester compounds, benzoin ether compounds, and thioxanthone compounds.

Specific examples of the photoradical polymerization initiator include 1-hydroxycyclohexyl phenyl ketone, 2-benzyl-2-dimethylamino-1-(4-morpholinophenyl)-1-butanone, 2-(dimethylamino)-2-((4-methylphenyl)methyl)-1-(4-(4-morpholinyl)phenyl)-1-butanone, 2,2-dimethoxy-1,2-diphenylethan-1-one, bis(2,4,6-trimethylbenzoyl)phenylphosphine oxide, 2-methyl-1-(4-methylthiophenyl)-2-morpholinopropan-1-one, 1-(4-(2-hydroxyethoxy)-phenyl)-2-hydroxy-2-methyl-1-propan-1-one, 1-(4-(phenylthio)phenyl)-1,2-octanedione 2-(O-benzoyloxime), 2-(acetoxyimino)-1-(4-(4-(2-hydroxyethoxy)phenylthio)phenyl)propan-1-one, 2,4,6-trimethylbenzoyldiphenylphosphine oxide, and 2,4-dimethylthioxanthen-9-one.

The lower limit of the amount of the photoradical polymerization initiator relative to 100 parts by mass of the curable resin is preferably 0.01 parts by mass, and the upper limit thereof is preferably 10 parts by mass. When the amount of the photoradical polymerization initiator is in the range, the resulting sealant for a light-control device can have better storage stability and better photocurability. The lower limit of the amount of the photoradical polymerization initiator is more preferably 0.1 parts by mass, and the upper limit thereof is more preferably 5 parts by mass.

The sealant for a light-control device of the present invention may contain a thermal radical polymerization initiator.

Examples of the thermal radical polymerization initiator include those composed of azo compounds and those composed of organic peroxides. From the standpoint of reducing the contamination of liquid crystal, electrochromic compound solutions, or the like, initiators composed of azo compounds (hereinafter also referred to as "azo initiators") are preferred.

Each of the thermal radical polymerization initiators may be used alone, or two or more of them may be used in combination.

Examples of the azo compounds include those having a structure formed of multiple units of polyalkylene oxide, polydimethylsiloxane, or the like that are linked via azo groups.

Preferred examples of such polymeric azo compounds having a structure formed of multiple units of polyalkylene oxide or the like that are linked via azo groups include those having a polyethylene oxide structure.

Specific examples of the azo compounds include 2,2'-azobis(2,4-dimethylvaleronitrile), 4,4'-azobis(4-cyanovaleric acid), polycondensates of 4,4'-azobis(4-cyanopentanoic acid) and polyalkylene glycols, and polycondensates of 4,4'-azobis(4-cyanopentanoic acid) and polydimethylsiloxane having a terminal amino group.

Examples of the azo initiators include VPE-0201, VPE-0401, VPE-0601, VPS-0501, VPS-1001, V-65, and V-501 (all available from FUJIFILM Wako Pure Chemical Corporation).

Examples of the organic peroxides include ketone peroxide, peroxyketals, hydroperoxides, dialkyl peroxides, peroxyesters, diacyl peroxides, and peroxydicarbonates.

The lower limit of the amount of the thermal radical polymerization initiator relative to 100 parts by mass of the curable resin is preferably 0.01 parts by mass, and the upper limit thereof is preferably 10 parts by mass. When the amount of the thermal radical polymerization initiator is in the range, the resulting sealant for a light-control device can have better storage stability and better thermal curability. The lower limit of the amount of the thermal radical polymerization initiator is more preferably 0.1 parts by mass, and the upper limit thereof is more preferably 5 parts by mass.

The sealant for a light-control device of the present invention contains an amine thermal curing agent.

The amine thermal curing agent acts as a nucleophile for the Michael addition reaction with the (meth)acrylic compound. Proceeding of the Michael addition reaction of the (meth)acrylic compound and the amine thermal curing agent allows the sealant for a light-control device of the present invention to have excellent adhesiveness, even with no or a small amount of epoxy compound. In the case that the sealant for a light-control device of the present invention contains a small amount of the epoxy compound, the amine thermal curing agent also acts as a curing agent for the epoxy compound.

Examples of the amine thermal curing agent include hydrazide compounds, imidazole derivatives, and amine adduct compounds. Preferred among these are primary amine compounds and secondary amine compounds. More preferred are hydrazide compounds.

The "hydrazide compound" herein refers to a compound having a hydrazide group.

Examples of the hydrazide compounds include sebacic dihydrazide, isophthalic dihydrazide, adipic dihydrazide, and malonic dihydrazide.

The lower limit of the amount of the amine thermal curing agent relative to 100 parts by mass of the curable resin is preferably 0.5 parts by mass, and the upper limit thereof is preferably 3.0 parts by mass. When the amount of the amine thermal curing agent is 0.5 parts by mass or more relative to 100 parts by mass of the curable resin, the resulting sealant for a light-control device can have better adhesiveness. When the amount of the amine thermal curing agent is 3.0 parts by mass or less relative to 100 parts by mass of the curable resin, the resulting sealant for a light-control device can have better low-contamination properties. The lower limit of the amount of the amine thermal curing agent relative to 100 parts by mass of the curable resin is more preferably 1.0 parts by mass, and the upper limit thereof is more preferably 1.5 parts by mass.

The lower limit of the amount of the amine thermal curing agent relative to 100 parts by mass of the bi- or higher functional (meth)acrylic compound is preferably 0.5 parts by mass, and the upper limit thereof is preferably 3.0 parts by mass. When the amount of the amine thermal curing agent is 0.5 parts by mass or more relative to 100 parts by mass of the bi- or higher functional (meth)acrylic compound, the resulting sealant for a light-control device can have better adhesiveness. When the amount of the amine thermal curing agent is 3.0 parts by mass or less relative to 100 parts by mass of the bi- or higher functional (meth)acrylic compound, the resulting sealant for a light-control device can have better low-contamination properties. The lower limit of the amount of the amine thermal curing agent relative to 100 parts by mass of the bi- or higher functional (meth)acrylic compound is more preferably 1.0 parts by mass, and the upper limit thereof is more preferably 1.5 parts by mass.

The sealant for a light-control device of the present invention may further contain a filler for purposes such as improving the viscosity, further improving the adhesiveness through the stress dissipation effect, improving the coefficient of linear expansion, and further improving the water vapor transmission barrier properties.

The filler may be an inorganic filler or an organic filler.

Examples of the inorganic filler include silica, talc, glass beads, asbestos, gypsum, diatomite, smectite, bentonite, montmorillonite, sericite, activated clay, alumina, zinc oxide, iron oxide, magnesium oxide, tin oxide, titanium oxide, calcium carbonate, magnesium carbonate, magnesium hydroxide, aluminum hydroxide, aluminum nitride, silicon nitride, barium sulfate, and calcium silicate.

Examples of the organic filler include polyester fine particles, polyurethane fine particles, vinyl polymer fine particles, and (meth)acrylic polymer fine particles. The organic filler may have a core-shell structure.

Each of the fillers may be used alone, or two or more of them may be used in combination.

In the case that the sealant for a light-control device of the present invention contains the filler, the lower limit of the amount of the filler relative to 100 parts by mass of the curable resin is preferably 10 parts by mass, and the upper limit thereof is preferably 50 parts by mass. When the amount of the filler is in the range, effects such as an adhesiveness-improving effect can be higher without lowering properties such as coating properties. The upper limit of the amount of the filler is more preferably 40 parts by mass.

The sealant for a light-control device of the present invention preferably further contains a silane coupling agent. The silane coupling agent mainly acts as an adhesive aid for good adhesion between the sealant for a light-control device and a substrate or the like.

Examples of suitable silane coupling agents include 3-aminopropyltrimethoxysilane, 3-mercaptopropyltrimethoxysilane, and 3-glycidoxypropyltrimethoxysilane.

The lower limit of the amount of the silane coupling agent relative to 100 parts by mass of the curable resin is preferably 0.8 parts by mass, and the upper limit thereof is preferably 3.4 parts by mass. When the amount of the silane coupling agent is in the range, contamination can be reduced while a higher adhesiveness-improving effect can be obtained. The lower limit of the amount of the silane coupling agent is more preferably 1.0 parts by mass, and the upper limit thereof is more preferably 3.0 parts by mass.

The sealant for a light-control device of the present invention may further contain additives such as light blockers, stress relievers, reactive diluents, thixotropic agents, spacers, curing accelerators, defoamers, leveling agents, or polymerization inhibitors.

The sealant for a light-control device of the present invention may be produced by, for example, a method including mixing the curable resin, the photoradical polymerization initiator, and the amine thermal curing agent with other components such as the inorganic filler and the silane coupling agent using a mixer.

Examples of the mixer include homogenizing dispersers, homogenizers, universal mixers, planetary mixers, kneaders, and triple roll mills.

The sealant for a light-control device of the present invention is suitably used for sealing an electrochromic device.

In the case that the sealant for a light-control device of the present invention is used for sealing an electrochromic device, a seal portion formed using the sealant for a light-control device of the present invention is preferably disposed around a solution containing an electrochromic compound and an electrolyte.

### - Advantageous Effects of Invention

The present invention can provide a sealant for a light-control device, the sealant having excellent adhesiveness and excellent low-contamination properties.

### DESCRIPTION OF EMBODIMENTS

In the following, the present invention is described in more detail with reference to examples. The present invention should not be limited to these examples.

### (Examples 1 to 20 and Comparative Examples 1 to 8)

The materials in accordance with the compositions shown in Tables 1 to 3 were stirred using a planetary stirrer and then mixed uniformly in a ceramic triple roll mill to provide sealants for light-control devices of Example 1 to 20 and Comparative Examples 1 to 8. The planetary stirrer used was Thinky Mixer (available from Thinky Corporation).

### <Evaluation>

The sealants for light-control devices obtained in the examples and the comparative examples were evaluated as follows. Tables 1 to 3 show the results.

### (Adhesiveness)

Two glass substrates (length 4.5 mm, width 2.5 mm), each with an ITO thin film, were provided. Microdroplets of the obtained sealant for a light-control device were dropped onto one of the substrates. To this substrate was bonded the other substrate with the ITO thin film such that the substrates formed a cross shape. The resulting workpiece was irradiated with UV light using a metal halide lamp at 100 mW/cm² for 30 seconds and then heated at 120°C for 60 minutes to provide a specimen. An end of one of the substrates of the obtained specimen was pushed with a metal cylinder (radius 5 mm) at a rate of 5 mm/min, and the strength when the panel was peeled off was measured.

The obtained measured value (kgf) divided by the diameter (cm) of the bonded portion was defined as the adhesion strength. The adhesiveness was evaluated in accordance with the following criteria.
∘∘: An adhesion strength of 2.5 kgf/cm or greater
∘: An adhesion strength of 2.0 kgf/cm or greater and less than 2.5 kgf/cm
△: An adhesion strength of 1.5 kgf/cm or greater and less than 2.0 kgf/cm
×: An adhesion strength of less than 1.5 kgf/cm

### (Water vapor transmission barrier properties)

The obtained sealant for a light-control device was applied to a smooth release film to a thickness of 200 to 300 µm. Subsequently, the resulting sample was irradiated with UV light using a metal halide lamp at 100 mW/cm² for 30 seconds and then heated at 120°C for 60 minutes to cure the sealant for a light-control device, whereby a film for measuring the water vapor transmission rate was obtained. A cup for testing the water vapor transmission rate was prepared in conformity with JIS Z 0208 Testing Methods for Determination of the Water Vapour Transmission Rate of Moisture-Proof Packaging Materials (Dish Method), and the obtained film for measuring the water vapor transmission rate was mounted therein. The cup was placed in a constant temperature and constant humidity oven at 80°C and 90% RH, and the water vapor transmission rate was measured. The water vapor transmission barrier properties were evaluated in accordance with the following criteria.
○○: A water vapor transmission rate of 60 g/m²·24 hr or less
○: A water vapor transmission rate of greater than 60 g/m²·24 hr and 70 g/m²·24 hr or less
△: A water vapor transmission rate of greater than 70 g/m²·24 hr and 80 g/m²·24 hr or less
×: A water vapor transmission rate of greater than 80 g/m²·24 hr

### (Applicability)

Two glass substrates, each with an ITO thin film, were provided. The obtained sealant for a light-control device was applied to one of the substrates using a dispenser to form a seal pattern in the shape of a quadrangular frame. The other substrate was then stacked thereon in vacuum. After the vacuum was released, the seal pattern portion was irradiated with UV light using a metal halide lamp at 100 mW/cm² for 30 seconds and then heated at 120°C for 60 minutes, whereby a specimen was obtained. The seal pattern portion in the obtained specimen was visually observed, and the applicability was evaluated in accordance with the following criteria.
○○: The seal pattern was composed of clear lines without line discontinuities or waviness.
○: The seal pattern had no line discontinuities but had waviness.
×: The seal pattern had a line discontinuity.

### (Low-contamination properties)

Two glass substrates, each with an ITO thin film, were provided. The obtained sealant for a light-control device was applied to one of the substrates using a dispenser to form an outer frame seal pattern in the shape of a circular frame. The sealant for a light-control device was applied in dots inside the formed seal pattern.

Subsequently, a solution containing ethyl 2-cyano-3,3-diphenylacrylate (30% by mass) as an electrochromic compound in γ-butyrolactone was dropped onto the entire surface inside the frame-patterned sealant on the glass substrate with the ITO thin film. The other substrate was stacked thereon in vacuum. After the vacuum was released, the outer frame seal pattern portion was irradiated with UV light using a metal halide lamp at 100 mW/cm² for 30 seconds and then heated at 120°C for 60 minutes, whereby a specimen was obtained. During UV irradiation, the dots of the sealant for a light-control device were masked from UV light.

A voltage of 1.0 V was applied to the obtained specimen for five minutes, and the area around the dots of the sealant for a light-control device was examined to determine the presence or absence of display unevenness and to determine the contamination distance. The low-contamination properties were evaluated in accordance with the following criteria.
1: No display unevenness occurred.
2: Display unevenness occurred and the contamination distance was 25 µm or less.
3: The contamination distance was greater than 25 µm and 50 µm or less.
4: The contamination distance was greater than 50 µm and 100 µm or less.
5: The contamination distance was greater than 100 µm and 200 µm or less.

**[Table 1]**

| | | | | Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| Composition (parts by mass) | Curable resin | (Meth)acrylic compound | Bisphenol A epoxy acrylate (Daicel-Allnex Ltd., EBECRYL 3700, bifunctional) | 40 | 40 | 40 | 40 | 40 | 40 | 90 | 70 | 20 | 10 |
| | | | Resorcinol epoxy acrylate (Daicel-Allnex Ltd., KRM8076, bifunctional) | 55 | 57 | 60 | 60 | 60 | 60 | 10 | 30 | 80 | 90 |
| | | | Ethylene oxide-added isocyanuric acid (di/tri)acrylate (Toagosei Co., Ltd., ARONIX M-315, bifunctional + trifunctional) | - | - | - | - | - | - | - | - | - | - |
| | | Epoxy compound | Bisphenol F epoxy compound (DIC Corporation, EPICLON 830) | 5 | 3 | - | - | - | - | - | - | - | - |
| | | | Partially acrylic-modified bisphenol A epoxy compound (Daicel-Allnex Ltd., UVACURE 1561) | | | | | | | | | | |
| | Photoradical polymerization initiator | | Oxime ester compound (Adeka Corporation, ADEKA ARKLS NCI-930) | 1.7 | 1.7 | 1.7 | 1.7 | 1.7 | 1.7 | 1.7 | 1.7 | 1.7 | 1.7 |
| | Thermal radical polymerization initiator | | 4,4'-Azobis(4-cyanovaleric acid), (FUJIFILM Wako Pure Chemical Corporation, V-501) | - | - | - | - | - | - | - | - | - | - |
| | Amine thermal curing agent | | Malonic dihydrazide (Otsuka Chemical Co., Ltd., MDH) | 1.0 | 0.5 | 3.0 | 1.5 | 1.0 | 1.0 | 1.0 | 1.0 | 1.0 | 1.0 |
| | | | Sebacic dihydrazide (Otsuka Chemical Co., Ltd., SDH) | - | - | - | - | - | - | - | - | - | - |
| | | | Amine adduct compound (Adeka Corporation, EH-5057PK) | | | | | | | | | | |
| | Acid anhydride | | RIKACID MH-700 (New Japan Chemical Co., Ltd.) | - | - | - | - | - | - | - | - | - | - |
| | Filler | | Silica (Admatechs Company Ltd., ADMAFINE SO-Cl) | 40 | 40 | 40 | 40 | 40 | 40 | 40 | 40 | 40 | 40 |
| | Silane coupling agent | | 3-Glycidoxypropyltrimethoxysilane (Chisso Corporation. Sila-Ace S510) | 1.7 | 1.7 | 1.7 | 1.7 | 1.7 | - | 1.7 | 1.7 | 1.7 | 1.7 |
| Evaluation | Adhesiveness | | | ○○ | ○○ | ○○ | ○○ | ○○ | ○○ | ○○ | ○○ | ○ | △ |
| | Water vapor transmission barrier properties | | | ○○ | ○○ | ○○ | ○○ | ○○ | ○○ | △ | ○ | ○○ | ○○ |
| | Applicability | | | ○○ | ○○ | ○○ | ○○ | ○○ | ○○ | ○○ | ○○ | ○○ | ○○ |
| | Low-contamination properties | | | 3 | 2 | 2 | 1 | 1 | 1 | 1 | 1 | 1 | 1 |

**[Table 2]**

| | | | | Example | | | | | | | | | |
|---|---|---|---|---|---|---|---|---|---|---|---|---|---|
| | | | | 11 | 12 | 13 | 14 | 15 | 16 | 17 | 18 | 19 | 20 |
| Composition (parts by mass) | Curable resin | (Meth)acrylic compound | Bisphenol A epoxy acrylate (Daicel-Allnex Ltd., EBECRYL 3700, bifunctional) | 40 | 40 | 40 | 40 | 40 | 20 | 40 | 40 | 40 | 40 |
| | | | Resorcinol epoxy acrylate (Daicel-Allnex Ltd., KRM8076, bifunctional) | 60 | 60 | 60 | 60 | 60 | 40 | 60 | 60 | 60 | 55 |
| | | | Ethylene oxide-added isocyanuric acid (di/tri)acrylate (Toagosei Co., Ltd., ARONIX M-315, bifunctional + trifunctional) | - | - | - | - | - | 40 | - | - | - | - |
| | | Epoxy compound | Bisphenol F epoxy compound (DIC Corporation, EPICLON 830) | - | - | - | - | - | - | - | - | - | - |
| | | | Partially acrylic-modified bisphenol A epoxy compound (Daicel-Allnex Ltd., UVACURE 1561) | - | - | - | - | - | - | - | - | - | 5 |
| | Photoradical polymerization initiator | | Oxime ester compound (Adeka Corporation, ADEKA ARKLS NCI-930) | 1.7 | 1.7 | 1.7 | 1.7 | 1.7 | 1.7 | 1.7 | 1.7 | 1.7 | 1.7 |
| | Thermal radical polymerization initiator | | 4,4'-Azobis(4-cyanovaleric acid), (FUJIFILM Wako Pure Chemical Corporation, V-501) | - | - | - | - | - | - | - | - | 0.8 | - |
| | Amine thermal curing agent | | Malonic dihydrazide (Otsuka Chemical Co., Ltd., MDH) | 0.5 | 0.5 | 0.5 | 0.5 | 0.5 | 0.5 | - | - | 0.5 | 0.5 |
| | | | Sebacic dihydrazide (Otsuka Chemical Co., Ltd., SDH) | - | - | - | - | - | - | 0.8 | - | - | - |
| | | | Amine adduct compound (Adeka Corporation, EH-5057PK) | - | - | - | - | - | - | - | 1.5 | - | - |
| | Acid anhydride | | RIKACID MH-700 (New Japan Chemical Co., Ltd.) | - | - | - | - | - | - | - | - | - | - |
| | Filler | | Silica (Admatechs Companv Ltd., ADMAFINE SO-Cl) | 40 | 50 | 20 | 10 | - | 40 | 40 | 40 | 40 | 40 |
| | Silane coupling agent | | 3-Glycidoxypropyltrimethoxysilane (Chisso Corporation, Sila-Ace S510) | 1.7 | 1.7 | 1.7 | 1.7 | 1.7 | 1.7 | 1.7 | 1.7 | 1.7 | 1.7 |
| Evaluation | Adhesiveness | | | ○ | ○○ | ○○ | ○○ | ○○ | ○ | ○○ | ○ | ○○ | ○○ |
| | Water vapor transmission barrier properties | | | ○○ | ○○ | ○ | ○ | △ | ○○ | ○○ | ○ | ○○ | ○○ |
| | Applicability | | | ○○ | ○ | ○○ | ○○ | ○○ | ○○ | ○○ | ○○ | ○○ | ○○ |
| | Low-contamination properties | | | 1 | 1 | 1 | 1 | 1 | 1 | 2 | 1 | 1 | 2 |

**[Table 3]**

| | | | | Comparative Example | | | | | | | |
|---|---|---|---|---|---|---|---|---|---|---|---|
| | | | | 1 | 2 | 3 | 4 | 5 | 6 | 7 | 8 |
| Composition (parts by mass) | Curable resin | (Meth)acrylic compound | Bisphenol A epoxy acrylate (Daicel-Allnex Ltd., EBECRYL 3700, bifunctional) | 40 | 40 | 40 | 40 | 40 | 40 | 40 | 40 |
| | | | Resorcinol epoxy acrylate (Daicel-Allnex Ltd., KRM8076, bifunctional) | 40 | 50 | 50 | 57 | 57 | 60 | 40 | 50 |
| | | | Ethylene oxide-added isocyanuric acid (di/tri)acrylate (Toagosei Co., Ltd., ARONIX M-315, bifunctional + trifunctional) | - | - | - | - | - | - | - | - |
| | | Epoxy compound | Bisphenol F epoxy compound (DIC Corporation, EPICLON 830) | 20 | 10 | 10 | 3 | 3 | - | - | - |
| | | | Partially acrylic-modified bisphenol A epoxy compound (Daicel-Allnex Ltd., UVACURE 1561) | - | - | - | - | - | - | 20 | 10 |
| | Photoradical polymerization initiator | | Oxime ester compound (Adeka Corporation, ADEKA ARKLS NCI-930) | 1.7 | 1.7 | 1.7 | 1.7 | 1.7 | 1.7 | 1.7 | 1.7 |
| | Thermal radical polymerization initiator | | 4,4'-Azobis(4-cyanovaleric acid), (FUJIFILM Wako Pure Chemical Corporation, V-501) | - | - | - | - | - | - | - | - |
| | Amine thermal curing agent | | Malonic dihydrazide (Otsuka Chemical Co., Ltd., MDH) | 3.0 | 3.0 | 1.5 | - | - | - | 1.5 | 1.0 |
| | | | Sebacic dihydrazide (Otsuka Chemical Co., Ltd., SDH) | - | - | - | - | - | - | - | - |
| | | | Amine adduct compound (Adeka Corporation, EH-5057PK) | | | | | | | | |
| | Acid anhydride | | RIKACID MH-700 (New Japan Chemical Co., Ltd.) | - | - | - | - | 20 | - | - | - |
| | Filler | | Silica (Admatechs Company Ltd., ADMAFINE SO-Cl) | 40 | 40 | 40 | 40 | 40 | 40 | 40 | 40 |
| | Silane coupling agent | | 3-Glycidoxypropyltrimethoxysilane (Chisso Corporation. Sila-Ace S510) | 1.7 | 1.7 | 1.7 | 1.7 | 1.7 | 1.7 | 1.7 | 1.7 |
| Evaluation | Adhesiveness | | | ○○ | ○○ | ○○ | × | × | × | ○○ | ○○ |
| | Water vapor transmission barrier properties | | | ○○ | ○○ | ○○ | ○ | ○ | ○○ | ○○ | ○○ |
| | Applicability | | | ○○ | ○○ | ○○ | ○○ | ○○ | ○○ | ○○ | ○○ |
| | Low-contamination properties | | | 5 | 4 | 4 | 5 | 5 | 1 | 5 | 4 |

### INDUSTRIAL APPLICABILITY

The present invention can provide a sealant for a light-control device, the sealant having excellent adhesiveness and excellent low-contamination properties.

## Claims

1. A sealant for a light-control device, the sealant comprising:
a curable resin;
a photoradical polymerization initiator; and
an amine thermal curing agent,
the curable resin containing a (meth)acrylic compound having no epoxy group,
the (meth)acrylic compound containing a compound having two or more (meth)acryloyl groups in one molecule,
the curable resin containing no epoxy compound or containing 5 parts by mass or less of an epoxy compound in 100 parts by mass of the curable resin.

2. The sealant for a light-control device according to claim 1,
wherein the curable resin contains no epoxy compound.

3. The sealant for a light-control device according to claim 1 or 2,
wherein the amine thermal curing agent is contained in an amount of 0.5 parts by mass or more and 3.0 parts by mass or less relative to 100 parts by mass of the curable resin.

4. The sealant for a light-control device according to claim 1, 2, or 3,
wherein the amine thermal curing agent is contained in an amount of 0.5 parts by mass or more and 3.0 parts by mass or less relative to 100 parts by mass of the compound having two or more (meth)acryloyl groups in one molecule.

5. The sealant for a light-control device according to claim 1, 2, 3, or 4,
wherein the amine thermal curing agent contains a hydrazide compound.

6. The sealant for a light-control device according to claim 1, 2, 3, 4, or 5, which is used for sealing an electrochromic device.
